(19) Europäisches Patentamt / European Patent Office / Office européen des brevets

(11) **EP 3 100 780 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(51) Int Cl.:
**B01D 46/00** *(2006.01)*         **B01D 46/24** *(2006.01)*
**B01D 46/42** *(2006.01)*         **F01M 13/04** *(2006.01)*

(21) Anmeldenummer: **16168043.4**

(22) Anmeldetag: **03.05.2016**

(54) **ÖLABSCHEIDER SOWIE VERFAHREN ZUR REGELUNG DES IN EINEM KURBELGEHÄUSE ENTLÜFTUNGS-SYSTEM HERRSCHENDEN DRUCKS**

OIL SEPARATOR AND METHOD FOR REGULATING THE PRESSURE IN A CRANK CASE VENTILATION SYSTEM

SEPARATEUR D'HUILE ET PROCEDE DE REGLAGE D'UNE PRESSION PRESENTE DANS UN SYSTEME D'AERATION DE CARTER DE VILEBREQUIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2015 DE 102015006768**

(43) Veröffentlichungstag der Anmeldung:
**07.12.2016 Patentblatt 2016/49**

(73) Patentinhaber: **MANN + HUMMEL GMBH**
**71636 Ludwigsburg (DE)**

(72) Erfinder:
• **ZÜRKER, Markus**
**67373 Dudenhofen (DE)**
• **MELDE, Markus**
**67346 Speyer (DE)**
• **EHRHARDT, Philipp**
**76689 Karlsdorf-Neuthard (DE)**

(74) Vertreter: **Mann + Hummel Intellectual Property**
**Mann + Hummel**
**International GmbH & Co. KG**
**Schwieberdinger Straße 126**
**71636 Ludwigsburg (DE)**

(56) Entgegenhaltungen:
EP-A1- 2 272 580         WO-A1-99/37386
US-A1- 2011 154 790      US-A1- 2014 033 668

**Beschreibung**

**Technisches Gebiet**

Die Erfindung betrifft einen nach dem Oberbegriff des Anspruchs 1 ausgebildeten Ölabscheider, ein zur Verwendung in einem solchen Ölabscheider ausgebildetes Filterelement sowie ein nach dem Oberbegriff des Anspruchs 13 ausgebildetes Verfahren zur Regelung des in einem K[urbel]G[ehäuse]E[ntlüftungs]-System herrschenden Drucks.

**Stand der Technik**

Bei Hubkolbenverbrennungsmotoren entsteht im Kurbelgehäuse ein ölhaltiges Leckage-gas - das sog. Blow-By-Gas. Seine Zurückführung in den Verbrennungsprozess ist weltweit gesetzlich vorgeschrieben und erfolgt in sogenannten geschlossenen K[urbel]G[e-häuse]E[ntlüftungs]-Systemen. Zu den wichtigsten Aufgaben eines K[urbel]G[ehäuse]E[ntlüftungs]-Systems gehören die Ölabscheidung und die Ölrückführung in das Kurbelgehäuse sowie die Regelung des Kurbelgehäusedrucks. Die Anforderungen an die Ölabscheidung ist dabei in den vergangenen Jahren mit der strenger werdenden Abgasgesetzgebung stetig gestiegen, um emissionsrelevante Motorkomponenten wie Abgasturbolader, Ladeluftkühler oder Sensoren vor einem Leistungsverlust durch Ölkontamination zu schützen. Somit liegt die Bedeutung der Ölabscheidung nicht allein in der Minimierung des Ölverbrauchs, sondern sie leistet heute vor allem einen wesentlichen Beitrag zur Einhaltung der Abgasgesetzgebung über die Fahrzeuglebensdauer. Neben der Ölabscheidung enthält ein K[urbel]G[ehäuse]E[ntlüftungs]-System je nach Entlüftungskonzept weitere wichtige Komponenten wie zum Beispiel ein D[ruck]R[egel]V[entil].

Ein D[ruck]R[egel]V[entil] für ein K[urbel]G[ehäuse]E[ntlüftungs]-System einer Brennkraftmaschine ist zum Beispiel aus den Druckschriften DE 10 2013 005 624 A1, WO 2005 088 417 A1, US 2011/154790A1, EP 2 272 580 A1 und WO 2007 13 50 82 A2 bekannt. Allgemein bekannte Druckregelventile haben einen Ventilschließkörper, der mit einem Ventilsitz zusammenwirkt, und eine Rückstellfeder, die auf den Ventilschließkörper in vom Ventilsitz abgewandter Richtung wirkt (DE 10 2004 02 22 75 A1).

Um bei einem Druckregelventil für eine Brennkraftmaschine die Lebensdauer der Rückstellfeder zu verlängern, wird in der DE 10 2004 02 22 75 A1 vorgeschlagen, die Rückstellfeder auf der vom Ventilsitz abgewandten Seite des Ventilverschließkörpers anzuordnen und so den Kontakt der Rückstellfeder mit aus dem Kurbelgehäuse austretenden aggressiven Blow-by-Gasen zu verhindern. Des Weiteren ist aus den Druckschriften WO 2007 13 50 82 A2 und JP 2003 33 65 16 A bekannt, die Rückstellfeder auf der Atmosphärenseite eines D[ruck]R[egel]V[entils] anzuordnen.

Die WO 2005 08 84 17 A1, WO 2009 15 63 03 A1, DE 10 2004 02 22 75 A1 und EP 1 32 95 98 A1 offenbaren das Befestigen einer als Dichtelement ausgebildeten Membran an einem Ventilelement mittels mindestens eines Spritzverfahrens, insbesondere durch Anspritzen an ein Ventilelement oder Umspritzen eines Ventilelements.

Bei bekannten Druckregelventilen ist der Ventilsitz des Druckregelventils an der Außenseite einer Seitenwand des K[urbel]G[ehäuse]E[ntlüftungs]-Systems angeordnet (DE 10 2013 005 624 A1) oder durch eine Seitenwand des Gehäuses des Kurbelgehäuseentlüftungssystems gebildet (WO2005/088 417 A1).

Der Erfindung liegt die Aufgabe zugrunde, einen Ölabscheider der vorstehend genannten Art sowie ein Verfahren der vorstehend genannten Art so weiterzubilden, dass dessen Funktion optimiert wird, insbesondere dass das K[urbel]G[ehäuse]E[ntlüftungs]-System möglichst wenig Bauraum beansprucht.

**Offenbarung der Erfindung**

Diese Aufgabe wird durch einen Ölabscheider mit den im Anspruch 1 angegebenen Merkmalen, die Verwendung eines Filterelements gemäß Anspruch 7, sowie durch ein Verfahren mit den im Anspruch 13 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die Erfindung darauf, die Funktionen des K[urbel]G[ehäuse]E[ntlüftungs]-Systems mit möglichst wenigen Bauteilen zu realisieren.

Erfindungsgemäß weist das Abdeckelement des Filterelements mindestens ein aus dem Inneren des Filterelements heraus leitendes, insbesondere sich vom Filterelement weg erstreckendes, insbesondere rohrförmiges, zum Abführen des gereinigten Fluids, insbesondere von Reinluft, ausgebildetes Reinfluidableitelement auf. Die vom Filterelement abgewandte Endfläche dieses Reinfluidableitelements ist als Dichtfläche für ein Ventil des K[urbel]G[ehäuse]E[ntlüftungs]-Systems ausgebildet oder weist eine Dichtfläche für ein Ventil des K[urbel]G[ehäuse]E[ntlüftungs]-System auf. Erfindungsgemäß ist die Dichtfläche als Ventilsitz für den Ventilschließkörper, insbesondere für ein den Ventilschließkörper umgebendes Ventilschließkörper-Dichtelement, des Druckregelventils ausgebildet. Neben der Funktion des Ableitens oder Abführens des gereinigten Fluids übernimmt das Reinfluidableitelement somit eine weitere Funktion, nämlich eine Dichtfunktion.

Die Dichtfläche ist im Wesentlichen eben und gratfrei, wobei die Enden, Ränder oder Kanten der Dichtfläche abgerundet sein können. Ferner ist die Dichtfläche bevorzugt rund, insbesondere kreisrund ausgeführt.

Durch die Anordnung der Dichtfläche am Reinfluidableitelement wie beschrieben ist die Dichtfläche und die durch diese definierte Ebene bevorzugt beabstandet von der axialen, äußeren Oberfläche des Abdeckelements. Diese Anordnung definiert gleichermaßen den Abstand des Ventils von dem Abdeckelement. Innerhalb dieses Abstandes kann vorteilhaft der Reinfluidauslass des Ölabscheidergehäuses, in welchem das Filterelement einzubauen ist, bauraumgünstig angeordnet werden. Für eine strömungsgünstige Gesamtauslegung ist es daher bevorzugt, wenn die Länge des Reinfluidableitelements gemessen von der axialen, äußeren Oberfläche des Abdeckelements, etwa dem Durchmesser des Reinfluidauslasses des Ölabscheidergehäuses entspricht.

Das Abdeckelement ist bevorzugt als eine Endscheibe des Filterelements ausgebildet. Diese ist mit dem Filtermedium an einer Stirnseite des Filterelements dichtend und unlösbar verbunden, beispielsweise durch Kleben oder Schweißen. Das Abdeckelement ist bevorzugt aus thermoplastischem Kunststoff, bevorzugt durch Spritzgießen hergestellt.

Das Reinfluidableitelement ist bevorzugt unlösbar (d. h. nicht zerstörungsfrei lösbar) und dichtend mit dem Abdeckelement verbunden, so dass die Rohseite von der Reinseite getrennt ist. Das Reinfluidableitelement ist besonders bevorzugt einstückig mit dem Abdeckelement ausgebildet.

Reinfluidableitelement und Abdeckelement sind bevorzugt umlaufend geschlossen ausgeführt. Dies bedeutet, dass das Reinfluidableitelement und das Abdeckelement so verbunden und ausgestaltet sind, dass außer der durch die Dichtfläche umgebenen Reinfluidaustrittsöffnung keine weitere Öffnung in Abdeckelement und Reinfluidableitelement vorhanden sind.

Das Reinfluidableitelement ist bevorzugt ein ovalzylindrisches, insbesondere kreiszylindrisches, insbesondere gerades Rohr. Dieses Rohr weist eine geschlossene zylindrische Wandung und zwei offene Enden auf, wobei an einem, von dem Abdeckelement abgewandten Ende die Dichtfläche ausgebildet ist und das andere Ende mit dem Abdeckelement verbunden ist, so dass eine fluidische Verbindung zum Innenraum des Filtermediums bzw. des Filterkörpers gebildet ist. Die Enden sind bevorzugt senkrecht zur Mittelachse orientiert.

In einer besonders bevorzugten Weiterbildung ist das Abdeckelement als ringförmige Endscheibe ausgebildet, von welcher sich das als Rohr ausgebildete Reinfluidableitelement auf der dem Filtermedium abgewandten Seite weg erstreckt.

Reinfluidelement und Abdeckelement bilden bevorzugt einen L- oder T-förmigen Querschnitt.

Ein bevorzugtes Ausführungsbeispiel des Filterelements der vorliegenden Erfindung weist ein Reinfluidableitelement auf, dessen Endfläche derart eben und/oder gratfrei ausgebildet ist, dass sie als Dichtfläche, insbesondere als Ventilsitz, für einen Ventilschließkörper eines Druckregelventils des Kurbelgehäuseentlüftungssystems, dienen kann.

Der Fachmann wird das Filterelement der vorliegenden Erfindung insbesondere beim Einsatz in einem Kurbelgehäuseentlüftungssystem mit integrierter Druckregelung oder mit integriertem Druckregelventil zu schätzen wissen. Das Filterelement kann nämlich mittels der erfindungsgemäßen Dichtfläche neben dem Abscheiden von Öl aus Aerosol eine weitere Funktion, nämlich eine Teilfunktion der Druckregelung übernehmen. Dabei kann die Dichtfläche des Filterelements als Ventilsitz für den Ventilschließkörper des Druckregelventils dienen. Die Dichtfläche kann also dazu ausgebildet sein, an der Regelung des Kurbelgehäusedrucks, insbesondere an der Begrenzung des Unterdrucks des K[urbel]G[ehäuse]E[ntlüftungs]-Systems, mitzuwirken.

Die Dichtfläche des Filterelements der vorliegenden Erfindung ermöglicht es, den Bauraum des K[urbel]G[ehäuse]E[ntlüftungs]-Systems im Vergleich zum beispielsweise in den Druckschriften DE 10 2013 005 624 A1 und WO 2005 088 417 A1 offenbarten Stand der Technik, bei dem der Ventilsitz des Druckregelventils an einer Gehäuseseitenwand des K[urbel]G[ehäuse]E[ntlüftungs]-Systems angeordnet ist, deutlich zu reduzieren. So können aufgrund der Dichtfläche des erfindungsgemäßen Filterelements die Komponenten des zur Regelung des Kurbelgehäusedrucks ausgebildeten Druckregelventils in das obere Gehäuseteil des K[urbel]G[ehäuse]E[ntlüftungs]-Systems aufgenommen werden.

Eine weitere Bauraumreduktion kann dadurch erreicht werden, dass das Filterelement dazu ausgelegt ist, von außen nach innen durchströmt zu werden und im Inneren des Filtermediums einen zum Abführen des gereinigten Fluids ausgebildeten Hohlraum aufweist. So muss im Gegensatz zum Stand der Technik, bei dem das Filtermedium von innen nach außen durchströmt wird, kein Kanal vorgesehen werden, mittels dessen das Fluid in das Innere des Filtermediums gelangen kann.

Der im Inneren des Filtermediums angeordnete und zum Abführen des Fluids ausgebildete Hohlraum ist vorteilhafterweise direkt mit dem Reinfluidableitelement verbunden oder geht direkt in einen zum Abführen des Fluids ausgebildeten Hohlraum des Reinfluidableitelements über.

Um das Filtermedium möglichst stabil gegen von außen auf das Filtermedium wirkende Kräfte auszubilden, weist das Filtermedium vorteilhafterweise einen ovalen, insbesondere kreisförmigen Querschnitt auf. Bei einer vorteilhaften Ausführungsform des K[ur-bel]G[ehäuse]E[ntlüftungs]-Systems weist auch das aus mindestens einem Gehäuseteil gebildete und zur Aufnahme des Filtermediums ausgebildete Gehäuse des K[urbel]G[e-häuse]E[ntlüftungs]-Systems einen ovalen, insbesondere kreisförmigen Querschnitt auf.

Als Filtermedium kann grundsätzlich jedes beliebige Material, insbesondere Vlies, zum Beispiel aus Metallfaser, Glasfaser und/oder Kunststofffaser, beispielsweise aus Polyester, verbaut werden. Auch die Kombination der genannten Materialien ist möglich. Des Weiteren kann das Filtermedium, wie in der DE 10 2011 016 893 A1 beschrieben, als Koaleszenzmedium ausgebildet sein. Bevorzugt ist das Filterelement als ringförmiges Koaleszenzelement ausgebildet. Hierzu weist das Filterelement bevorzugt als Vlies ausgebildetes Filtermedium auf, das bevorzugt mehrfach und damit mehrlagig ringförmig um ein Stützrohr herum gewickelt ist. Dies bedeutet, dass das Filtermedium bevorzugt als mindestens ein Vlieswickel ausgebildet ist. Zur Stabilisierung und Abdichtung ist weiter bevorzugt stirnseitig jeweils ein Abdeckelement, bevorzugt als Endscheibe ausgebildet, vorgesehen.

Der Ölabscheider ist bevorzugt wie beschrieben als Koaleszenzfilter ausgebildet. Das K[urbel]G[ehäuse]E[nt-lüftungs]-System kann als geschlossenes K[urbel]G[ehäuse]E[nt-lüftungs]-System, bei dem das Rein-Leckage-Gas in den Verbrennungsprozess zurückgeführt wird, oder als offenes K[urbel]G[ehäuse]E[ntlüftungs]-System ausgebildet sein.

Die Dichtfläche des Filterelements ist besonders stabil und kann besonders einfach hergestellt werden, wenn die Dichtfläche, das Reinfluidableitelement und das Abdeckelement einstückig ausgebildet sind.

Unabhängig hiervon oder in Verbindung hiermit ist bei einem bevorzugten Ausführungsbeispiel des Filterelements der vorliegenden Erfindung die Dichtfläche und/oder die Endscheibe aus einem mechanisch festen und/oder steifen Material gebildet, beispielsweise aus Polyamid 66 mit 35 % Glasfaser (PA 66 GF35).

Um die Dichtheit des Druckregelventils zu verbessern, weist der Ventilschließkörper zumindest an seinem in Kontakt mit dem Ventilsitz des Filterelements anordbaren Bereich mindestens ein elastisch ausgebildetes Ventilschließkörper-Dichtelement auf.

Das Dichtelement des Ventilschließkörpers weist vorteilhafterweise im Wesentlichen mindestens ein Elastomer auf. Insbesondere kann das Ventilschließkörper-Dichtelement aus mindestens einem Elastomer, beispielsweise aus Ethylen-Acrylat-Kautschuk (AEM) und/oder aus insbesondere hydriertem Nitrilkautschuk ([H]NBR) und/oder aus Acrylat-Kautschuk (ACM) gebildet sein. Im Vergleich zum Stand der Technik, bei dem die Abdichtung des Ventilsitzes und des Ventilschließkörpers ausschließlich durch harte Komponenten erfolgt, kann durch die elastische Ausbildung des Ventilschließkörper-Dichtelements die Dichtigkeit des Druckregelventils wesentlich verbessert werden.

Bei einem vorteilhaften Ausführungsbeispiel eines Ölabscheiders der vorliegenden Erfindung geschieht die Abdichtung weich auf hart. So sind beispielsweise der Ventilschließkörper und das Reinfluidableitelement, insbesondere der Ventilsitz, im Wesentlichen aus Polyamid 66 mit 35 % Glasfaser (PA 66 GF35) und das Ventilschließkörper-Dichtelement im Wesentlichen aus Ethylen-Acrylat-Kautschuk (AEM) und/oder aus Acrylat-Kautschuk (ACM) gebildet.

Die Dichtigkeit des Druckregelventils kann zudem dadurch verbessert werden, dass das Dichtelement des Ventilschließkörpers fest oder unlösbar mit dem Ventilschließkörper verbunden ist, insbesondere mittels mindestens eines Spritzverfahrens auf den Ventilschließkörper aufgebracht ist. Ventilschließkörper-Dichtelement und Ventilschließkörper bilden also vorteilhafterweise eine Einheit. Bei einer vorteilhaften Ausführungsform der vorliegenden Erfindung ist das Ventilschließkörper-Dichtelement nicht, wie aus dem Stand der Technik bekannt, in den Ventilkörper eingeknüpft, sondern der Ventilkörper ist vom Ventilschließkörper-Dichtelement umspritzt und bildet eine feste Einheit mit dem Ventilschließkörper-Dichtelement.

Ein weiteres Abgrenzungskriterium eines vorteilhaften Ausführungsbeispiels eines Ölabscheiders der vorliegenden Erfindung gegenüber dem Stand der Technik ist also, dass der Ventilschließkörper und das Ventilschließkörper-Dichtelement fest miteinander verbunden sind. Das Ventilschließkörper-Dichtelement bildet dabei eine feste Einheit mit dem Ventilschließkörper, was die Dichtigkeit verbessert.

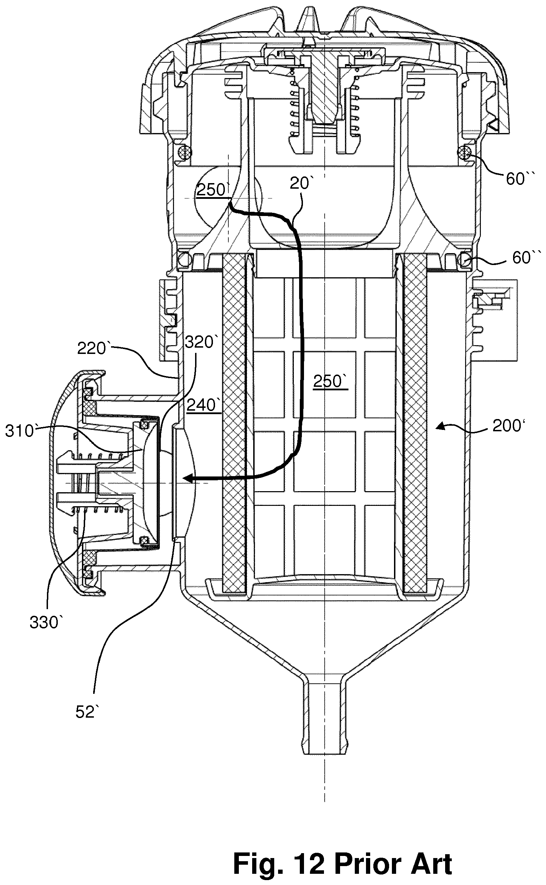

Eine besonders hohe Dichtigkeit des Druckregelventils kann auch dadurch erreicht werden, dass der Ventilschließkörper an seinem dem Ventilsitz zugewandten Bereich, insbesondere an seinem in Kontakt mit dem Ventilsitz des Filterelements anordbaren Bereich, flach oder eben ausgebildet ist. Im Gegensatz hierzu ist beim Stand der Technik der Ventilschließkörper an seinem dem Ventilsitz zugewandten Bereich üblicherweise tellerförmig gewölbt ausgebildet. Im Gegensatz zur Tellerform beim Stand der Technik weist der Ventilschließkörper, insbesondere das Ventilschließkörper-Dichtelements, eines optimierten Ausführungsbeispiels eines Ölabscheiders der vorliegenden Erfindung also eine flache bzw. ebene Form auf, welches das Abdichtverhalten stark verbessert. Unabhängig hiervon oder in Verbindung hiermit weist ein besonders vorteilhaftes Ausführungsbeispiel eines Ölabscheiders der vorliegenden Erfindung gegenüber dem beispielsweise in Figur 12 gezeigten Stand der Technik den Vorteil auf, dass sich die Komponenten des Druckregelventils oder die Druckregelung im Gehäuseoberteil befinden.

Eine Besonderheit der vorliegenden Erfindung ist, dass die Einheit Filterelement die Endposition für den Ventilschließkörper darstellt.

Eine weitere Besonderheit der vorliegenden Erfindung ist, dass das Filterelement zwei Funktionen übernimmt:

1. Abscheiden von Öl aus dem Gas
2. Teilfunktion der Druckregelung.

## Kurze Beschreibung der Zeichnungen

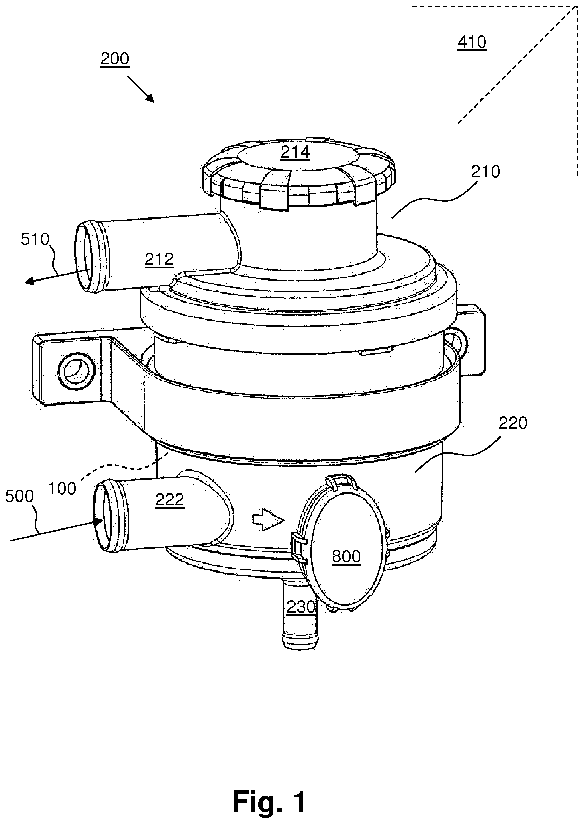

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 5 nachgeordneten Ansprüche verwiesen, andererseits werden weitere Ausgestaltungen, Merkmale und Vorteile der vorliegenden Erfindung nachstehend unter anderem anhand des durch die Figuren 1 bis 10 veranschaulichten Ausführungsbeispiels näher erläutert. Es zeigt:

Fig. 1   in perspektivischer Darstellung ein Ausführungsbeispiel für ein K[urbel]G[ehäuse]E[ntlüftungs]-System gemäß der vorliegenden Erfindung, dessen Druckregelventil nach dem Verfahren der vorliegenden Erfindung arbeitet;

Fig. 2   in Längsschnittdarstellung das K[urbel]G[ehäuse]E[ntlüftungs]-System aus Fig. 1 mit einem Ausführungsbeispiel für einen Ölabscheider gemäß der vorliegenden Erfindung, dessen Druckregelventil nach dem Verfahren der vorliegenden Erfindung arbeitet;

Fig. 3   in Längsschnittdarstellung eine Detailansicht des Ölabscheiders aus Fig. 2;

Fig. 4   eine Draufsicht auf den Ölabscheider aus Fig. 2;

Fig. 5   in perspektivischer Darstellung den Ventilschließkörper und das Ventilschließkörper-Dichtelement des Druckregelventils des Ölabscheiders aus Fig. 2;

Fig. 6   in Längsschnittdarstellung den Ventilschließkörper und das VentilschließkörperDichtelement aus Fig. 2;

Fig. 7   in perspektivischer Darstellung den Ventilschließkörper, eine Rückstellfeder und einen Druckregelungseinsatz des Ölabscheiders aus Fig. 2;

Fig. 8   in perspektivischer Explosionsdarstellung die Komponenten eines Ausführungsbeispiels für ein Filterelement zur Verwendung gemäß der vorliegenden Erfindung;

Fig. 9   in perspektivischer Explosionsdarstellung die im Gehäusedeckel des in Fig. 1 dargestellten K[urbel]G[ehäuse]E[ntlüftungs]-Systems angeordneten Komponenten;

Fig. 10   in Detailansicht das Druckregelventil des K[urbel]G[ehäuse]E[ntlüftungs]-Systems aus Fig. 1, wobei die den Ventilschließkörper beaufschlagenden Kräfte markiert sind;

Fig. 11   ein Ausführungsbeispiel für eine Regelkennlinie des Kurbelgehäusedrucks in Abhängigkeit vom an der Ausgangsseite des Druckregelventils des K[urbel]G[ehäuse]E[ntlüftungs]-Systems aus Fig. 1 anliegenden Unterdruck;

Fig. 12   ein Ölabscheider nach dem Stand der Technik; und

Fig. 13   eine Seitenansicht des nach dem Stand der Technik ausgebildeten Ölabscheiders aus Fig. 12.

Gleiche oder ähnliche Ausgestaltungen, Elemente oder Merkmale sind in den Figuren 1 bis 12 mit identischen Bezugszeichen versehen.

## Ausführungsform(en) der Erfindung

Figur 1 zeigt in einer perspektivischen Ansicht ein nur schematisch angedeutetes Kurbelgehäuse 410, welches einen Ölabscheider 200 eines K[urbel]G[ehäuse]E[ntlüftungs]-Systems umfasst. Das Kurbelgehäuse 410 ist Bestandteil einer Brennkraftmaschine. Die Brennkraftmaschine kann in einem Kraftfahrzeug verbaut sein. Der Ölabscheider 200 ist als Ölabscheider für ölhaltige Luft aus einem Innenraum des Kurbelgehäuses 410 ausgebildet. Die ölhaltige Luft ist bei derartigen Anwendungen meist versetzt mit Verbrennungsgasen, die aus den Zylindern als Leckagegas in das Kurbelgehäuse austreten. Diese Mischung wird regelmäßig auch als Kurbelgehäusegas bezeichnet, wobei vorliegend zur Vereinfachung der Begriff Luft weiter Verwendung findet.

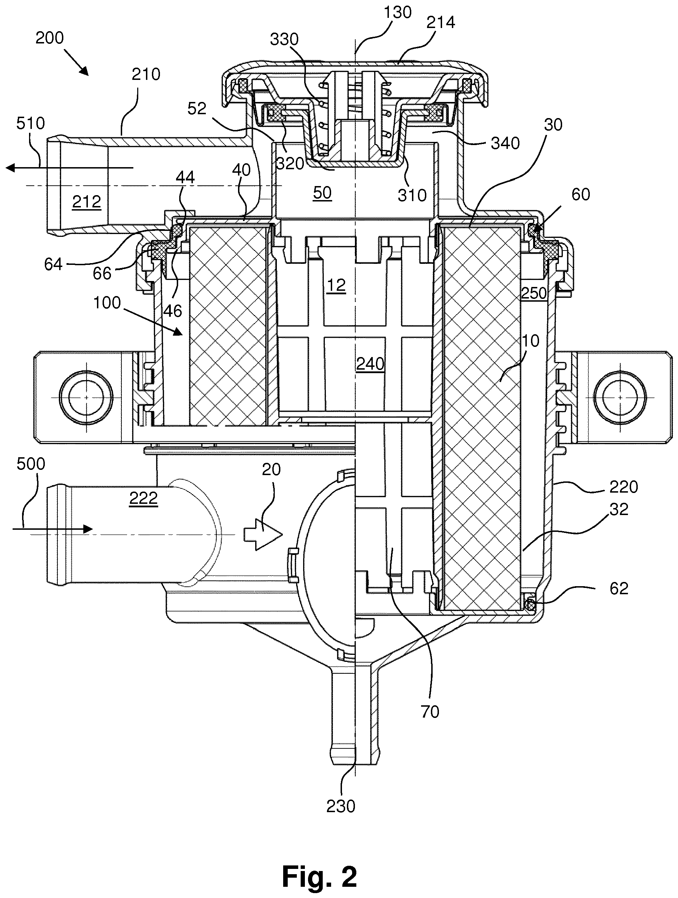

Der Ölabscheider 200 umfasst ein im Wesentlichen ovalzylindrisches, insbesondere kreiszylindrisches Filtergehäuse, welches sich aus einem ersten Filtergehäuseteil 210, nämlich einem Gehäusedeckel, und einem zweiten Filtergehäuseteil 220, nämlich einem Gehäusekörper, zusammensetzt. Das zweite Filtergehäuseteil 220 weist einen Einlass 222 für die ölhaltige Luft 500 auf. In dem Filtergehäuse ist ein Filterelement 100 angeordnet, welches mindestens ein Filtermedium 10 aus ringförmig, beispielsweise kreisringförmig oder ovalringförmig, angeordnetem Filtermaterial umfasst, siehe Fig. 2. Das Filterelement 100 ist in Fig. 1 durch das Filtergehäuse verdeckt und daher mit einer gestrichelten Bezugszeichenlinie versehen. Innerhalb des Filtergehäuses 210, 220 wird die Luft 500 (ein entsprechender Luftstrom 20 ist in Fig. 2 durch einen Pfeil angedeutet) mittels des Filtermediums 10 gefiltert. Die entstehende Reinluft 510 wird aus einem von dem Filtermedium 10 umschlossenen Innenraum 12 (Figur 2) über ein Reinluftableitelement 50 des Filterelements 100 zu einem Reinluftauslass 212 des Gehäusedeckels 210 und vom Reinluftauslass 212 zurück in den Ansaugtrakt der Brennkraftmaschine geführt. Abgeschiedenes Öl wird über einen Ölauslass 230 abgeführt.

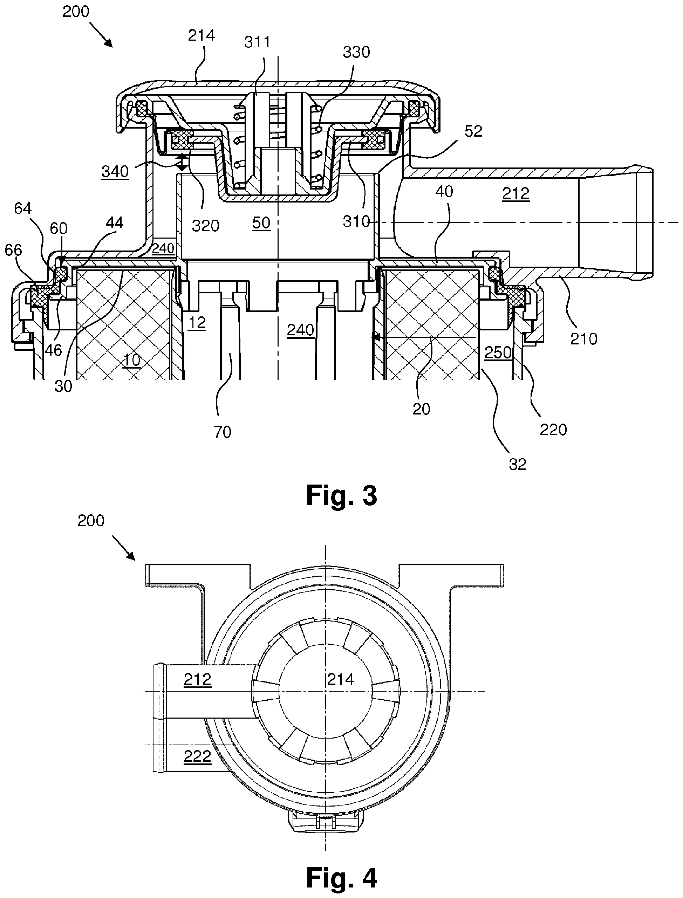

Um den Kurbelgehäuseunterdruck auf einen definierten Wert zu begrenzen, weist der Ölabscheider 200 ein Druckregelventil auf. Das beispielsweise in Figuren 2 und 3 dargestellte Druckregelventil hat einen Ventilschließkörper 310, der von einem Ventilschließkörper-Dichtelement 320, bevorzugt wie hier gezeigt von einer Membran, umgeben ist.

An ihrem vom Ventilschließkörper 310 abgewandten Ende ist die Membran 320 mit dem ersten Filtergehäuseteil 210 verbunden, beispielsweise in das erste Filtergehäuseteil 210 eingeklipst. Alternativ kann die Membran 320 auch zwischen Filtergehäuseteil 210 und Abdeckelement 214 eingespannt sein. Bevorzugt ist die Membran, wie in der vorliegend beschriebenen Ausführungsform, zwischen dem ersten Filtergehäuseteil 210 und einem Einsatz 350, der auch weiter bevorzugt den unteren Anschlag der Feder 330 bildet, verklemmt. Der Einsatz 350 weist Öffnungen auf, so dass der Umgebungsdruck auf die Membran 320 und den Ventilschließkörper 310 wirken kann.

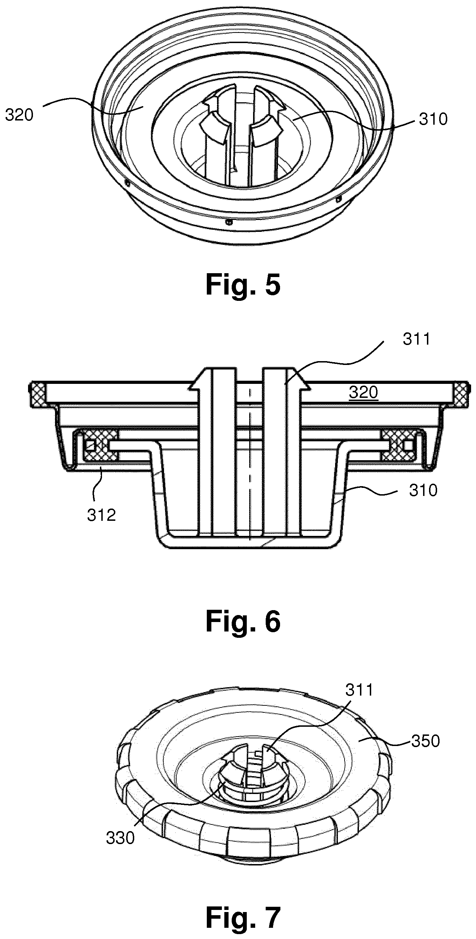

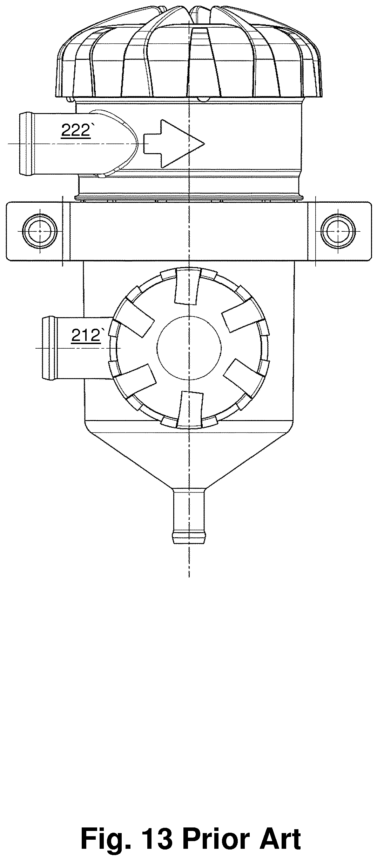

Zum Schließen des Druckregelventils weist dieses einen am Filterelement 100 angeordneten Ventilsitz 52 auf. Im Gegensatz zum in Figuren 12 und 13 gezeigten Stand der Technik weist das in den Figuren 2, 3, 8 und 10 gezeigte Filterelement 100 ein als Endscheibe ausgeführtes Abdeckelement 40 auf, das an seiner vom Filterelement 100 abgewandten Endfläche eine Dichtfläche 52 aufweist, wobei diese Dichtfläche 52 zur Abdichtung des Druckregelventils 52, 310, 320, 330 vorgesehen ist, indem das Ventilschließkörper-Dichtelement 320 oder der Ventilschließkörper 310 bevorzugt mit einer Anlagefläche 312 (siehe Fig. 6) des Ventilschließkörpers 310 oder der Membran 320, insbesondere zum Schließen des Ventils, dichtend zur Anlage an die Dichtfläche 52 kommen kann.

Die Membran 320 ist dazu ausgebildet, den Reinluftauslass 212 und den Innenraum 12 des Filtermediums 10 gegenüber dem Umgebungsluftdruck abzudichten und den Ventilschließkörper axialbeweglich zu halten.

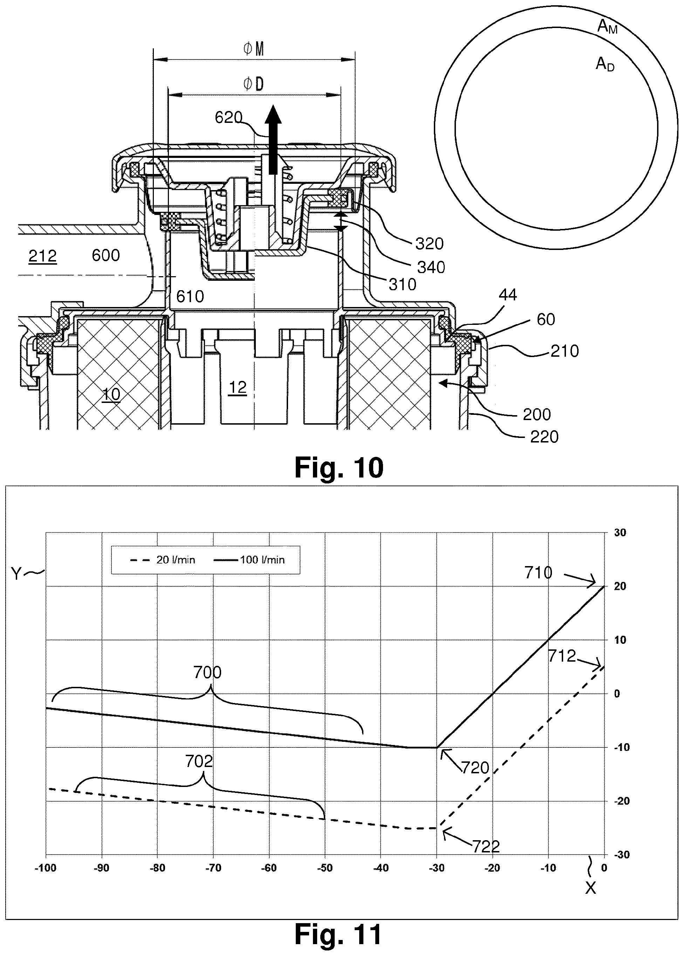

Der Ventilschließkörper 310 ist, wie in Figur 10 gezeigt, relativ zum Ventilsitz 52 bewegbar. Auf der linken Seite der gezeigten Schnittansicht ist der geschlossene Zustand des Ventils gezeigt, dabei liegt der Ventilschließkörper 310 mit einer kreisringförmigen Anlagefläche 312 (siehe Figur 6) bevorzugt wie gezeigt axial an der Dichtfläche 52 an, auf der rechten Seite des Schnittes ist der Ventilschließkörper 310 von der Dichtfläche 52 beabstandet, so dass das Ventil geöffnet ist. Das Druckregelventil 52, 310, 320, 330 ist dazu ausgebildet, die Durchflussmenge oder den Volumenstrom des durch das Reinfluidableitelement 50 abfließenden Fluids mittels der Bewegung des Ventilschließkörpers 310 relativ zum Ventilsitz 52, insbesondere durch die Änderung des Querschnitts des durch den Spalt zwischen Dichtfläche 52 und Ventilschließkörper 310 gebildeten Strömungskanals 340, zu steuern.

Das Druckregelventil ist derart ausgebildet, dass die Membran 320 auf ihrer dem Filterelement 100 bzw. dem Gehäuseinneren zugewandten Seite im Bereich der durch die Durchmesser $\varnothing_M$ und $\varnothing_M$ definierten Kreisringfläche $A_M$ mit dem im Reinluftauslass 212 herrschenden Druck 600 beaufschlagt wird, der Ventilschließkörper 310 auf seiner dem Filterelement 100 bzw. dem Gehäuseinneren zugewandten Seite im Bereich der durch den Innendurchmesser $\varnothing_D$ der Dichtfläche 52 definierten Kreisfläche $A_D$ mit dem im Innenraum 12 des Filtermediums 10 herrschenden Druck 610 beaufschlagt wird. Auf der dem Filterelement 100 bzw. dem Gehäuseinneren abgewandten Seite sind Membran 320 und Ventilschließkörper 310 ferner vom Umgebungsdruck beaufschlagt. Ferner ist bevorzugt eine Rückstellfeder 330 vorgesehen, die die Membran 320 und/oder den Ventilschließkörper 310 mit einer in Öffnungsrichtung wirkenden, d.h. eine vom Filterelement 100 weg gerichtete Kraft, beaufschlagt. Mindestens eine Öffnung in einem Druckregelventil-Abdeckelement 214 und/oder einem Einsatz 350 führt dazu, dass auf der Rückseite der Membran Umgebungsdruck anliegt, diese Entlüftung ermöglicht, dass das Druckregelventil ungedämpft arbeiten kann.

An der vom Filterelement 100 abgewandten Seite des Ventilschließkörpers 310 ist, wie bereits beschrieben, bevorzugt eine Rückstellfeder 330 angeordnet. Die Rückstellfeder 330 beaufschlagt den Ventilschließkörper 310 und/oder die daran angeordnete Membran 320 mit einer vom Ventilsitz 52 weg gerichteten Kraft 620 (vgl. Figur 10). Die Druckfeder oder Rückstellfeder 330 dient dazu, die Ruheposition des Ventilschließkörpers 310 sicherzustellen. Die Ruheposition entspricht der Position des Ventilschließkörpers 310, bei der die Kraft der Rückstellfeder 330 genau so groß ist, wie die Summe der Kraft des Kurbelgehäusedrucks 610 und der Kraft des Absaugdrucks 600.

Auf dem Weg vom Innenraum 12 des Filtermediums 10 zum Reinluftauslass 212 durchfließt das Reinfluid einen zwischen dem Ventilschließkörper 310, insbesondere der am Ventilschließkörper 310 angeordneten Membran 320, und dem Ventilsitz 52 angeordneten Strömungskanal 340 (vgl. Figuren 3 und 10), der bevorzugt wie vorliegend die Form eines Ringspaltes aufweist. Durch die relative Bewegung des Ventilschließkörpers 310 zum Ventilsitz 52 ist der Durchmesser dieses Strömungskanals 340 veränderbar oder regulierbar.

Mit abnehmendem Druck im Reinluftauslass 212 bzw. auf der Ausgangsseite des Druckregelventils macht die Membran 320 eine Hubbewegung in Richtung Ventildom oder Ventilsitz 52 und reduziert dadurch den Querschnitt des Strömungskanals 340. Dadurch erhöht sich der Strömungswiderstand des Druckregelventils über den Ventilsitz 52.

Über die Durchmesserquerschnittsverhältnisse $\varnothing_M$, $\varnothing_D$ von Membran 320 und dem Innendurchmesser der Dichtfläche 52 bzw. der der vom Filterelement 100 abgewandten Endfläche des Reinfluidableitelements 50, kann das Regelverhalten des Druckregelventils eingestellt werden. Der Querschnittsdurchmesser $\varnothing_M$ der Membran 320 (im vorliegenden Ausführungsbeispiel definiert durch den Rollpunkt der Membran 320) und der Querschnittsinnendurchmesser $\varnothing_D$ der Dichtfläche 52 ist in Figur 10 gezeigt.

Der Ventilschließkörper 310 ist in Ruheposition (Schließposition), wenn

a) die Kraft F der Rückstellfeder 330
b) minus dem Differenzdruck $\Delta p$ aus dem atmosphärischen Druck und dem Kurbelgehäusedruck 610, multipliziert mit der Querschnittsfläche $A_D$ (definiert durch den Innendurchmesser $\varnothing_D$ des Ventilsitzes 52)
c) minus dem Differenzdruck $\Delta p$ aus dem atmosphärischen Druck und dem Absaugdruck 600, multipliziert mit der Querschnittsfläche $A_M$ (definiert durch den Ring zwischen Querschnittsdurchmesser $\varnothing_M$ der Membran 320 und Innendurchmesser $\varnothing_D$ des Ventilsitzes 52) Null ergibt.

In Kurzform gilt also

$$0 = F_{\text{Rückstellfeder 330}} - F_{(\text{Kurbelgehäusedruck 610})} - F_{(\text{Absaugdruck 600})}$$

$$= F_{\text{Rückstellfeder 330}} - \Delta p_{(\text{atmosphärischer Druck – Kurbelgehäusedruck})} * A_D - \Delta p_{(\text{atmosphärischer Druck – Absaugdruck})} * A_M$$

Die Rückstellfeder 330 verhindert, dass schon bei kleinen Absaugunterdrücken 600 vom Turbolader oder Ansaugtrakt des Motors die Membran 320 permanent verschlossen ist. Des Weiteren kann mittels der Rückstellfeder 330 die Lage der Druckregelcharakteristik variiert werden. Dies bedeutet, dass bei einer härteren Rückstellfeder 330 der Absaugunterdruck 600 stärker auf das Kurbelgehäuse wirken kann und sich die Kurve nach unten verlagert.

Figur 11 zeigt eine beispielhafte Regelkennlinie eines Druckregelventils. Auf der Y-Achse ist der im Einlass für Rohfluid 222 bzw. auf der Rohseite 250 herrschende Druck, insbesondere der Kurbelgehäusedruck, in Hektopascal [hPa] dargestellt. Auf der X-Achse ist der im Reinluftauslass 212 herrschende Druck, insbesondere der Saugunterdruck, in Hektopascal [hPa] dargestellt. Die erste Regelkennlinie, welche in Figur 11 mit einer durchgezogenen Linie dargestellt ist, zeigt Druckverhältnisse bei einem Volumenstrom im Druckregelventil von 100 Litern pro Minute. Die zweite Regelkennlinie, die in Figur 11 mit einer gestrichelten Linie dargestellt ist, zeigt Druckverhältnisse bei einem Volumenstrom im Druckregelventil von 20 Litern pro Minute. Der Regelbereich der beispielhaft gezeigten beiden Regelkennlinien liegt im Bereich -2 hPa bis -28 hPa. Die Steigung der mit Bezugszeichen 700, 702 markierten Bereiche der beiden Regelkennlinien ist abhängig von den Flächenverhältnissen $A_D$ und $A_M$ des Ventilsitzes 52 und der Membran 320. Der mit dem Bezugszeichen 710 bzw. 712 markierte Schnittpunkt der beiden Regelkennlinien mit der Y-Achse zeigt den Druckverlust bei geöffnetem Druckregelventil.

Wie in Figur 11 dargestellt, beeinflusst der Druckverlust des Ölabscheiders 200 auch die Lage der Druckregelkurve, wobei mit zunehmendem Druckverlust bzw. Volumenstrom, auch die Lage der Druckregelkurve steigt. Umgekehrt sinkt bei geringerem Volumenstrom der Kurbelgehäusedruck.

Das Verhältnis der Querschnittsdurchmesser $\varnothing_M$ und $\varnothing_D$ von Membran 320 und Dichtfläche 52 beeinflusst die Steigung 700, 702 der Druckregelkurve. Herrscht im Kurbelgehäuse gegenüber der Atmosphäre ein Unterdruck und wird dabei die Vorspannung der Rückstellfeder 330 überwunden, so bewegt sich die Membran 320 auf die Dichtfläche 52 zu und der Strömungswiderstand steigt.

Erst wenn der Saugunterdruck 600 groß genug ist und die Rückstellfeder 330 zusammengedrückt wird, kommt es zu einem gekrümmten Kurvenverlauf und schließlich zu einem Minimum des Kurbelgehäusedrucks.

Bei noch höheren Saugunterdrücken ist ein leichter Anstieg des Drucks 610 im Innenraum 12 des Filtermediums, insbesondere des Kurbelgehäusedrucks, zu beobachten. In diesen Betriebsbereichen verschließt die Membran 320 intervallweise die Saugseite des Ventils und drosselt bzw. unterbricht somit den Volumenstrom. Dieser mittlere Druck ist höher als der Minimaldruck, da bei verschlossenem Ventilsitz 52 und stärkerem Saugunterdruck 600 der Druck 610 im Kurbelgehäuse entsprechend höher sein muss, um die Membran 320 gegen den auf der Außenseite des Ventilsitzes 52 wirkenden Saugunterdruck wieder von diesem abzuheben.

Der Ölabscheider 200 kann aus Sicherheitsgründen ein Überdruckventil 800 (Figur 1) aufweisen. Dieses Überdruckventil kann beispielsweise wie in DE 10 2013 005 624 A1 beschrieben ausgebildet sein.

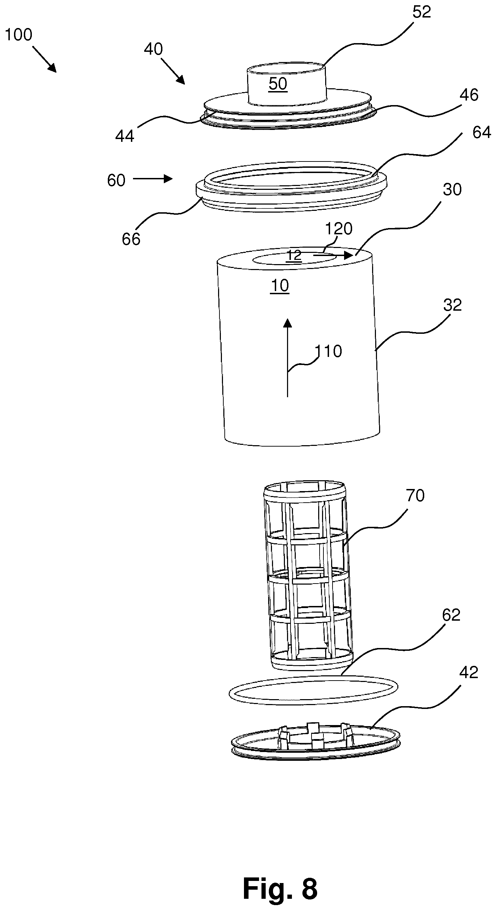

Figur 8 zeigt die Komponenten eines Ausführungsbeispiels eines Filterelements 100 eines Ölabscheiders nach der vorliegenden Erfindung. Dieses Filterelement 100 ist für das in Figur 1 gezeigte K[urbel]G[ehäuse]E[ntlüftungs]-System ausgebildet. Das Filterelement 100 hat ein Abdeckelement, insbesondere eine Endscheibe 40. Diese Endscheibe 40 deckt die dem Reinfluidauslass 212 zugewandte Deckfläche 30 (vgl. Figur 3) des Filtermediums 10 ab und ist mit diesem dichtend verbunden, damit das Fluid das Filtermedium 10 bis in den Innenraum 12 des Filtermediums 10 durchströmt. Das Filterelement 100 ist als ringförmiges Koaleszenzelement ausgebildet. Hierzu weist das Filterelement 100 wie bevorzugt ein als Vlies ausgebildetes Filtermedium 10 auf, das mehrfach und damit mehrlagig ringförmig um das Mittelrohr 70 (auch Stützrohr genannt) herum gewickelt ist. Das Mittelrohr 70 ist durchströmbar und weist daher Öffnungen auf. Dies kann beispielsweise durch eine gitterförmige Ausführung, wie in Fig. 8 gezeigt, mittels eines Lochblechs oder ähnlicher Ausführungen realisiert werden. Das Filtermedium 10 ist als ein Vlieswickel ausgebildet. Zur Stabilisierung und Abdichtung ist dieser wie bevorzugt stirnseitig jeweils mit einem als Endscheibe ausgeführten Abdeckelement 40, 42 dichtend verbunden, beispielsweise mittels Kleben oder Schweißen. Der Aufbau des Koaleszenzelements mit dem gewickelten Vlies unterscheidet sich damit grundsätzlich von anderen Filterelementen, die zur Separation von Festpartikeln aus Fluiden wie Luft oder Öl bestimmt sind und im Regelfall ein gefaltetes Filtermedium aufweisen.

Die Dichtfläche 52 am Reinfluidableitelement 50 ist beabstandet von der axialen, äußeren Oberfläche des Abdeckelements 40. Damit wird der für den Reinfluidauslass 212 benötigte axiale Bauraum überbrückt. Die Länge des Reinfluidableitelements 50 gemessen von der axialen, äußeren Oberfläche des Abdeckelements 40 entspricht dem Durchmesser des Reinfluidauslasses 212 des oberen Gehäuseteils 210. Damit kann eine strömungsgünstige Gesamtauslegung erreicht werden, bei welcher die Positionierung der Dichtfläche 52 am Abdeckelement 40 bzw. am Filterelement 100 keine Nachteile mit sich bringt.

Das Abdeckelement 40 ist in der in den Figuren 2, 3 und 8 im Detail gezeigten Ausführungsform wie bevorzugt als eine Endscheibe des Filterelements 100 ausgebildet. Diese ist mit dem Filtermedium an einer Stirnseite des Filterelements dichtend und unlösbar verbunden, beispielsweise durch Kleben oder Schweißen. Das Abdeckelement 40 ist bevorzugt aus thermoplastischem Kunststoff, bevorzugt durch Spritzgießen, hergestellt.

Das Reinfluidableitelement 50 ist in der in den Figuren 2, 3 und 8 im Detail gezeigten Ausführungsform mit dem Abdeckelement 40 wie bevorzugt einstückig dichtend verbunden ausgebildet.

Das Reinfluidableitelement 50 ist, wie ebenfalls in den Figuren gezeigt, bevorzugt ein kreiszylindrisches, gerades Rohr. Dieses Rohr weist eine geschlossene zylindrische Wandung und zwei offene Enden auf, wobei an einem von dem Abdeckelement abgewandten Ende die Dichtfläche 52 ausgebildet ist und das andere Ende mit dem Abdeckelement 40 verbunden ist, so dass eine fluidische Verbindung zum Innenraum 12 des Filtermediums 10 bzw. des Filterkörpers gebildet ist. Die Enden sind bevorzugt senkrecht zur Mittelachse orientiert.

In der in den Figuren 2, 3 und 8 im Detail gezeigten Ausführungsform ist wie bevorzugt das Abdeckelement 40 als ringförmige Endscheibe ausgebildet, von welcher sich das als Rohr ausgebildete Reinfluidableitelement 50 auf der dem Filtermedium 10 abgewandten Seite einstückig mit dem Abdeckelement ausgebildet weg erstreckt. Reinfluidelement und Abdeckelement bilden bevorzugt wie gezeigt einen im Wesentlichen L- förmigen oder alternativ T-förmigen Querschnitt.

Das K[urbel]G[ehäuse]E[ntlüftungs]-System besitzt zwei Räume die voneinander getrennt werden müssen, nämlich den Rohraum oder die Rohseite 250, auf der sich das ungereinigte Blow-By-Gas befindet, und den Reinraum oder die Reinseite 240, auf der sich das gereinigte Gas befindet. Zudem müssen Rohraum 250 und Reinraum 240 zusätzlich zur Atmosphäre abgetrennt werden. Um diese Aufgabe nur mit einer Dichtung zu lösen, weist das z.B. in Figur 8 gezeigte Filterelement 100 ein als Kombidichtung ausgebildetes Dichtelement, nämlich eine Filterelementdichtung 60, auf, die es ermöglicht, alle drei Bereiche gegenseitig abzutrennen.

Die Filterelementdichtung 60 (vgl. Figuren 2, 3 und 8) dient also zur Abdichtung

- der Rohseite 250 des Filterelements 100 von der Reinseite 240 des Filterelements 100,
- des Innenraums des Gehäuseoberteils 210 zum Umgebungsluftdruck sowie
- des Innenraums des Gehäuseunterteils 220 zum Umgebungsluftdruck.

Ein besonderer Vorteil der in Figuren 2, 3 und 8 gezeigten Filterelementdichtung 60 gegenüber Filterelementdichtungen aus dem Stand der Technik ist die funktionale Entkopplung zweier Dichtungsfunktionen, nämlich einerseits des Abdichtens des Innenraums des Filtergehäuses 210, 220 von der Umgebung und andererseits des Abdichtens der Rohseite 250 von der Reinseite 240. Die beiden in den Figuren 2 und 8 gezeigten Dichtbereiche, nämlich der radial dichtende Bereich 64 und der axial dichtende Bereich 66, sind in ihrer Funktion unabhängig und doch in einem Teil, nämlich dem Dichtelement 60, integriert.

Die in Figuren 2, 3 und 8 gezeigte Filterelementdichtung 60 weist also einen mittels einer definierten Kraft radial verpressten Bereich 64 und einen mittels einer definierten Kraft axial verpressten Bereich 66 auf, wobei der radial verpresste Bereich 64 und der axial verpresste Bereich 66 miteinander verbunden sind und ein zusammenhängendes Dichtelement bilden, das zwei unabhängige Dichtungsfunktionen erfüllt. Die Dichtkräfte werden vom Fachmann durch Auslegung der Dichtungsparameter E-Modul, Dichtungsabmessung und Dichtspaltabmessung definiert.

Eine definierte radiale Abdichtung kann dadurch bereitgestellt werden, dass bei dem in den Figuren 2, 3 und 8 gezeigten Ölabscheider 200 die Filterelementdichtung 60 mittels einer definierten Kraft radial zwischen dem Gehäuseoberteil 210 und der Endscheibe 40 verpresst ist. Dies wird vorteilhafterweise dadurch erreicht, dass sich das Gehäuseoberteil 210 bis zur Höhe der Endscheibe 40 erstreckt, die Endscheibe 40 also über der Gehäusekante des Gehäuseoberteils 210 angeordnet ist.

Der radial dichtende Bereich 64 kann nach Art eines O-Rings ausgebildet sein (vgl. Figuren 2 und 3). Der axial dichtende Bereich 66 ist insbesondere in Form eines Wulstes mit im Wesentlichen rechteckigem Querschnitt ausgebildet und weist weiter bevorzugt zwei gegenüberliegende Dichtflächen auf, welche in dichtendem Kontakt mit Gehäuseoberteil 210 und unterem Gehäuseteil 220 stehen und zwischen den Gehäuseteilen axial verpresst werden. In diesem Fall setzt sich die Filterelementdichtung 60 aus einem O-Ring und einer axialen Dichtung zusammen, die im Verbund hergestellt werden.

Im Innenraum 12 des Filtermediums 10 kann ein als Stützelement für das Filtermedium 10 ausgebildetes Mittelrohr 70 angeordnet sein. Das Mittelrohr stützt das Filtermedium 10 und schützt dieses vor einem Kollabieren.

Um sicherzustellen, dass das Fluid das Filtermedium 10 bis in den Innenraum 12 des Filtermediums 10 durchströmt, weist das Filterelement 100 an seinem dem Ölauslass 230 zugewandten Ende ein weiteres Abdeckelement 42, insbesondere eine weitere Endscheibe 42, auf.

Zum Abdichten der Reinseite des Filterelements von der Rohseite des Filterelements kann dem weiteren Abdeckelement 42 eine, beispielsweise als O-Ring ausgebildete, weitere Filterelementdichtung 62 zur Abdichtung des weiteren Abdeckelements 42 gegenüber dem Gehäuseteil 220 zugeordnet sein. Diese weitere Filterelementdichtung 62 ist bevorzugt radial außen an dem weiteren Abdeckelement 42 angeordnet. Das Abdeckelement 42 ist ebenfalls bevorzugt als Endscheibe, insbesondere als offene Endscheibe mit zentraler Öffnung für den Ölablass ausgebildet.

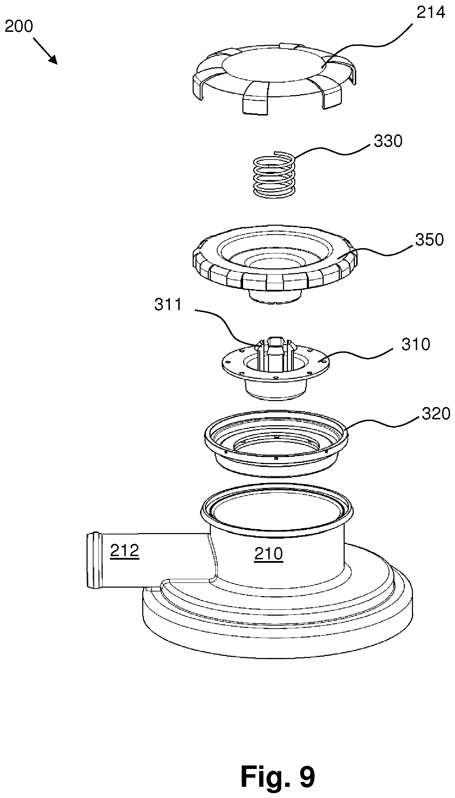

Figur 9 zeigt in Explosionsdarstellung die im oberen Gehäuseteil 210 angeordneten Komponenten der Druckregelung. Die Dichtfläche 52 ist auch eine Komponente der Druckregelung. Da die Dichtfläche 52 am Filterelement 100 angeordnet ist, ist diese in Figur 8 dargestellt.

Ventilschließkörper 310 und Membran 320 führen bei der Druckregelung eine vertikale Hubbewegung durch (vgl. Figur 9). Bei dieser vertikalen Hubbewegung werden Ventilschließkörper 310 und Membran 320 zum Filterelement 100 hin und vom Filterelement weg bewegt.

Zu den in Figur 9 gezeigten Komponenten der Druckregelung gehören:

- das zum Abdecken des ersten Gehäuseteils 210 ausgebildete Druckregelelement-Abdeckelement 214 mit einer Öffnung zur Erdatmosphäre,
- der Ventilschließkörper 310,
- die Membran 320,
- vorzugsweise mindestens ein zwischen Membran 320 und Ventilschließkörper 310 angeordneter zur Druckregelung ausgebildeter Einsatz 350
- die Rückstellfeder 330 und
- das erste Gehäuseteil 210.

Die Rückstellfeder 330 ist auf der dem Ventilsitz 52 abgewandten Seite des Ventilschließkörpers 310 angeordnet und stützt sich unten auf dem Einsatz 350 ab, der bevorzugt ebenfalls eine Öffnung aufweist. Die Rückstellfeder 330 befindet sich somit auf der Atmosphärenseite. Der Ventilschließkörper 310 weist bevorzugt mindestens einen und besonders bevorzugt, wie vorliegend gezeigt, drei oder vier Fortsätze 311 auf, die durch mindestens eine Öffnung des Einsatzes 350 hindurchragen. Die Rückstellfeder kann somit bevorzugt zwischen Einsatz 350 und dem Fortsatz bzw. den Fortsätzen 311, insbesondere den Haken am Ende der Fortsätze, axial eingespannt werden. Auf diese Weise kann die Rückstellfeder 330 auf den Ventilschließkörper eine öffnende, insbesondere weg von der Dichtfläche 52 gerichtete, Kraft ausüben.

Figuren 12 und 13 zeigen ein Ausführungsbeispiel eines Ölabscheiders 200' eines K[urbel]G[ehäuse]E[ntlüftungs]-Systems nach dem Stand der Technik. Die Druckregelung dieses Ölabscheiders 200' befindet sich an der Seite des zweiten Gehäuseteils 220'. Der Ventilschließkörper 310' weist eine Tellerform auf. Der Ventilsitz 52' ist hier an die Gehäuse-Außenseite angespritzt. Die Abdichtung zwischen Ventilsitz 52' und Ventilschließkörper 310' geschieht hart auf hart, insbesondere durch gleiche Werkstoffe der beiden Komponenten. Diese Kombination gleicher Werkstoffe von Ventilsitz 52' und mit dem Ventilsitz 52' in Kontakt bringbaren Bereich des Ventilschließkörpers 310' beeinflusst das Abdichtverhalten negativ.

Nach einer vorteilhaften Ausführungsform ist vorgesehen, dass sich die Rückstellfeder 330 bei dem in den Figuren 1 bis 11 gezeigten Ausführungsbeispiel der vorliegenden Erfindung auf der Atmosphärenseite befindet. Bevorzugt befindet sich die Rückstellfeder dabei geschützt in einem durch Membran 320 und Ventilschließkörper 310 auf der einen Seite und Druckregelventil-Abdeckelement 214 auf der anderen Seite gebildeten Raum. Durch die Anordnung außerhalb des Fluidstroms ist die Feder vor einer Beeinflussung durch im Fluidstrom enthaltene, sich auf der Feder ablagernde Verunreinigungen geschützt.

Im Gegensatz zu dem in den Figuren 2 und 3 gezeigten Filtermedium 100 durchströmt das Fluid das in Figur 12 gezeigte Filtermedium nach dem Stand der Technik von innen nach außen. Die Strömungsrichtung des Fluids ist mittels eines Pfeils markiert.

Anstelle einer Kombidichtung weist das in Figur 12 gezeigte K[urbel]G[ehäuse]E[ntlüftungs]-System zum Abdichten der Reinseite 240 des Filterelements 100 von der Umgebung und zum Abdichten der Rohseite 250 des Filterelements 100 von der Reinseite 240 des Filterelements 100 zwei getrennte O-Ringe 60" auf.

**Bezugszeichenliste**

| | |
|---|---|
| 10 | Filtermedium, insbesondere Vlieswickel |
| 12 | vom Filtermedium 10 umschlossener Innenraum oder Hohlraum |
| 20 | Strömungsrichtung des zu filternden Fluids, insbesondere Strömungsrichtung des das Filtermedium 10 durchströmenden Rohfluids 500, bei der vorliegenden Erfindung vgl. Figuren 2 und 3 |
| 30 | Deckfläche des Filtermediums 10 |
| 32 | Mantelfläche des Filtermediums 10 |
| 40 | Abdeckelement des Filtermediums 10, insbesondere dem Reinfluidauslass 212 zugewandte Endscheibe des Filtermediums 10 |
| 42 | weiteres Abdeckelement des Filtermediums 10, insbesondere dem Ölauslass 230 zugewandte Endscheibe des Filterelements 100 |
| 44 | zum Befestigen des Dichtelements 60 ausgebildete Befestigungskontur der Endscheibe 40 |
| 46 | Stützkontur der Endscheibe 40 vgl. Figur 8 |
| 50 | Reinfluidableitelement, insbesondere zum Abführen des Reinfluids ausgebildeter Dom oder Stutzen, beispielsweise rohrförmig ausgebildetes Reinfluidableitelement |
| 52 | Dichtfläche, insbesondere Ventilsitz, des Filterelements 100 der vorliegenden Erfindung |
| 52' | Ventilsitz beim Stand der Technik (Figuren 12, 13) |
| 60 | Dichtelement nach der vorliegenden Erfindung, vgl. Figuren 2, 3 und 8, insbesondere Filterelementdichtung, beispielsweise zur Abdichtung der Rohseite des Filterelements 100 von der Reinseite des Filterelements 100 sowie zur Abdichtung des Innenraums des Filtergehäuses zur Umgebung, |
| 60" | zweites Ausführungsbeispiel für ein Dichtelement, insbesondere für eine Filterelementdichtung, nach dem Stand der Technik vgl. Figur 12 |
| 62 | weitere Filterelementdichtung, insbesondere O-Ring |
| 64 | radial dichtender Bereich des Dichtelements 60, insbesondere innerhalb des Filtergehäuses verpresster Bereich des Dichtelements 60 |
| 66 | axial dichtender Bereich des Dichtelements 60, insbesondere zwischen dem ersten Gehäuseteil 210 und dem weiteren Gehäuseteil 220 verpresster Bereich des Dichtelements 60 |
| 70 | Stützelement, insbesondere Mittelrohr, des Filterelements 100 |
| 100 | Filterelement, insbesondere Ringfilterelement, beispielsweise auswechselbares Filterelement oder Wechselelement |
| 110 | Längsachse des Ringfilterelements 100 bzw. des Gehäusekörpers 220, vgl. Fig. 8 |
| 120 | Radius des Ringfilterelements 100 bzw. des Gehäusekörpers 220, vgl. Fig. 8 |
| 130 | Rotationsachse, vgl. Figur 2 |
| 200 | Ölabscheider des Kurbelgehäuseentlüftungssystems der vorliegenden Erfindung (Figuren 1 bis 4, 9 und 10) |
| 200' | Ölabscheider des Standes der Technik (Fig. 12, 13) |
| 210 | erstes oder oberes Gehäuseteil des Ölabscheiders 200, insbesondere Gehäusedeckel des Filtergehäuses des Ölabscheiders 200 |
| 212 | Reinfluidauslass des Ölabscheiders 200 der vorliegenden Erfindung, insbesondere Reinfluidauslass des ersten oder oberen Gehäuseteils 210 |
| 212' | Reinfluidauslass des Ölabscheiders des Standes der Technik (Fig. 12, 13) |
| 214 | Druckregelventil-Abdeckelement |
| 220 | weiteres oder zweites oder unteres Gehäuseteil des Ölabscheiders 200 der vorliegenden Erfindung (Fig. 1 bis 3 und 10), insbesondere Gehäusekörper des Filtergehäuses des Ölabscheiders 200 |
| 220' | unteres Gehäuseteil des Ölabscheiders 200' aus dem Stand der Technik (Fig. 12, 13) |
| 222 | Einlass für Rohfluid, insbesondere für ölhaltiges Gas, beispielsweise für ölhaltige Luft, des Ölabscheiders 200 der vorliegenden Erfindung (Fig. 1, 2 und 4) |
| 222' | Einlass für Rohfluid, insbesondere für ölhaltiges Gas, beispielsweise für ölhaltige Luft, des Ölabscheiders des Standes der Technik (Fig. 12, 13) |
| 230 | Ölauslass |
| 240 | Reinraum oder Reinseite des Filterelements 100 der vorliegenden Erfindung |
| 240' | Reinraum oder Reinseite des Filterelements nach dem Stand der Technik, vgl. Fig. 12 |
| 250 | Rohraum oder Rohseite des Filterelements 100 der vorliegenden Erfindung |
| 250' | Rohraum oder Rohseite des Filterelements nach dem Stand der Technik, vgl. Fig. 12 |
| 310 | Ventilschließkörper, insbesondere Regelzapfen, des Ölabscheiders 200 der vorliegenden Erfindung |
| 310' | Ventilschließkörper, insbesondere Regelzapfen, des Standes der Technik (Fig. 12, 13) |
| 311 | Fortsätze, insbesondere vom Ventilschließkörper nach oben ragende, hakenartige Fortsätze, an welchen die Rückstellfeder 330 angreifen kann, wobei die Fortsätze bevorzugt einstückig mit dem Ventilschließkörper ausgebildet sind |
| 312 | Anlagefläche des Ventilschließkörpers zur Anlage an der Dichtfläche 52 des Filterelements 100 insbesondere |

zum Schließen des Ventils

320 Ventilschließkörper-Dichtelement, insbesondere den Ventilschließkörper 320 umgebende Membran, beispielsweise sich zwischen Ventilschließkörper 310 und erstem Gehäuseteil 210 erstreckende Membran

320' Ventilschließkörper-Dichtelement des Standes der Technik (Fig. 12, 13)

330 Rückstellfeder des Ölabscheiders 200 der vorliegenden Erfindung

330' Rückstellfeder des Standes der Technik (Fig. 12, 13)

340 zwischen Ventilschließkörper 310, insbesondere dem Ventilschließkörper-Dichtelement 320, und Dichtfläche 52 angeordneter Strömungskanal

350 zur Druckregelung ausgebildeter Einsatz

410 Gehäuse des Kurbelgehäuseentlüftungssystems

500 Rohfluid, insbesondere ölhaltiges Gas, beispielsweise ölhaltige Luft

510 Reinfluid, insbesondere Reingas, beispielsweise Reinluft

600 durch den im Reinluftauslass 212 herrschenden Druck, insbesondere Absaugdruck, beispielsweise Saugunterdruck, ausgeübte Kraft

610 durch den im Innenraum 12 des Filtermediums 10 herrschenden Druck, insbesondere den Kurbelgehäusedruck, ausgeübte Kraft

620 durch die Rückstellfeder 330 ausgeübte Kraft

700 Bereich der ersten Regelkennlinie, dessen Steigung abhängig ist von den Abmessungen, insbesondere von den Flächenverhältnissen $A_M/A_D$

702 Bereich der zweiten Regelkennlinie, dessen Steigung abhängig ist von den Abmessungen, insbesondere von den Flächenverhältnissen $A_M/A_D$

710 Schnittpunkt der ersten Regelkennlinie mit der Y-Achse, welcher den Druckverlust bei geöffnetem Druckregelventil anzeigt

712 Schnittpunkt der zweiten Regelkennlinie mit der Y-Achse, welcher den Druckverlust bei geöffnetem Druckregelventil anzeigt

720 Wendepunkt der ersten Regelkennlinie in Abhängigkeit der Druckfeder oder der Federrate der Rückstellfeder 330

722 Wendepunkt der zweiten Regelkennlinie in Abhängigkeit der Druckfeder der Rückstellfeder 330 oder der Federrate der Rückstellfeder 330

800 Überdruckventil

$A_M$ Querschnittsfläche der Membran 320

$A_D$ Querschnittsfläche des Innendurchmessers $\varnothing_D$ der Dichtfläche 52 oder Querschnittsfläche des Innendurchmessers der vom Filterelement 100 abgewandten Endfläche des Reinfluidableitelements 50

$\varnothing_M$ Querschnittsdurchmesser der Membran 320

$\varnothing_D$ Querschnittsinnendurchmessers der Dichtfläche 52 oder Innendurchmesser der vom Filterelement 100 abgewandten Endfläche des Reinfluidableitelements 50

## Patentansprüche

1. Ölabscheider (200) für ein K[urbel]G[ehäuse]E[ntlüftungs]-System, aufweisend mindestens ein zum Abscheiden von Öl aus Fluid ausgebildetes Filterelement (100) und mindestens ein zur Regelung des Kurbelgehäusedrucks, insbesondere zur Begrenzung des im K[urbel]G[ehäuse]E[ntlüftungs]-System anliegenden Unterdrucks, ausgebildetes Druckregelventil mit mindestens einem Ventilschließkörper (310), der mit mindestens einem Ventilsitz zusammenwirkt,

das Filterelement aufweisend

mindestens ein zum Abscheiden von Öl aus Fluid, insbesondere aus Aerosol, ausgebildetes Filtermedium (10) mit einer sich parallel zur Strömungsrichtung (20) des das Filtermedium (10) durchströmenden Fluids erstreckenden Deckfläche (30) und mindestens ein zum Abdecken der Deckfläche (30) ausgebildetes Abdeckelement (40), wobei das Abdeckelement (40) mindestens ein sich vom Filterelement (100) weg erstreckendes und zum Abführen des gereinigten Fluids ausgebildetes Reinfluidableitelement (50) aufweist,

**dadurch gekennzeichnet, dass**

die vom Filterelement (100) oder Filtermedium (10) abgewandte Endfläche des Reinfluidableitelements (50) als Dichtfläche (52) für das Druckregelventil (52, 310, 320, 330), des K[urbel]G[ehäuse]E[ntlüftungs]-Systems, ausgebildet ist und den Ventilsitz (52) für den Ventilschließkörper (310) bildet.

2. Ölabscheider nach Anspruch 1, **dadurch gekennzeichnet, dass** der Ventilschließkörper (310) zumindest an seinem in Kontakt mit dem Ventilsitz (52) des Filterelements (100) anordbaren Bereich mindestens ein elastisch ausgebildetes Ventilschließkörper-Dichtelement (320) aufweist, insbesondere an seinem in Kontakt mit dem Ventilsitz (52) des Filterelements (100) anordbaren Bereich von einem elastisch ausgebildeten Ventilschließkörper-Dichtelement (320) umgeben ist.

3. Ölabscheider nach Anspruch 2, **dadurch gekennzeichnet, dass** das Ventilschließkörper-Dichtelement (320) im Wesentlichen mindestens ein Elastomer aufweist, insbesondere aus mindestens einem Elastomer, beispielsweise aus Ethylen-Acrylat-Kautschuk (AEM) und/oder aus Acrylat-Kautschuk (ACM) und/ oder aus insbesondere hydriertem Nitrilkautschuk (H)NBR gebildet ist.

4. Ölabscheider nach einem der vorhergehenden Ansprüche, **dadurch gekennzeichnet, dass** das Ventilschließkörper-Dichtelement (320) fest oder unlösbar mit dem Ventilschließkörper (320) verbunden ist, insbesondere mittels mindestens eines Spritzverfahrens auf den Ventilschließkörper aufgebracht ist.

5. Ölabscheider nach mindestens einem der vorhergehenden Ansprüche, **dadurch gekennzeichnet, dass** der Ventilschließkörper (310) an seinem dem Ventilsitz (52) zugewandten Bereich, insbesondere an seinem in Kontakt mit dem Ventilsitz (52) des Filterelements (100) anordbaren Bereich, flach oder eben ausgebildet ist.

6. Ölabscheider nach mindestens einem der vorhergehenden Ansprüche, **gekennzeichnet durch** ein erstes Gehäuseteil (210) und ein weiteres Gehäuseteil (220), wobei das erste Gehäuseteil (210) mindestens einen zum Abführen des gereinigten Fluids ausgebildeten Ölabscheider-Reinfluidauslass (212) aufweist und wobei das Druckregelventil (52, 310, 320 330) im ersten Gehäuseteil (210) aufgenommen ist.

7. Verwendung eines Filterelements (100) mit

   - mindestens einem zum Abscheiden von Öl aus Fluid, insbesondere aus Aerosol, ausgebildeten Filtermedium (10) mit einer sich parallel zur Strömungsrichtung (20) des das Filtermedium (10) durchströmenden Fluids erstreckenden Deckfläche (30) und
   - mindestens einem zum Abdecken der Deckfläche (30) ausgebildeten Abdeckelement (40) wobei das Abdeckelement (40) mindestens ein sich vom Filterelement (100) weg erstreckendes und zum Abführen des gereinigten Fluids ausgebildetes Reinfluidableitelement (50) aufweist,

   in einem Ölabscheider eines K[urbel]G[ehäuse]E[ntlüftungs]-Systems mit mindestens einem zur Regelung des Kurbelgehäusedrucks, insbesondere zur Begrenzung des im K[urbel]G[ehäuse]E[ntlüftungs]-System anliegenden Unterdrucks, ausgebildeten Druckregelventil mit mindestens einem Ventilschließkörper (310), **dadurch gekennzeichnet, dass** die vom Filterelement (100) oder Filtermedium (10) abgewandte Endfläche des Reinfluidableitelements (50) als Dichtfläche (52) für das Druckregelventil (52, 310, 320, 330), des K[urbel]G[ehäuse]E[ntlüftungs]-Systems und Ventilsitz (52) für den Ventilschließkörper (310) verwendet wird.

8. Verwendung eines Filterelements nach Anspruch 7, **dadurch gekennzeichnet, dass** ein zylindrisch, insbesondere ovalzylindrisch, ausgebildetes und im Inneren des Filtermediums (10) einen Hohlraum (12) aufweisendes Filterelement (100) verwendet wird, wobei das zu filternde Fluid von der Mantelfläche (32) des Filtermediums (10) zu dem Hohlraum (12) strömt und der Hohlraum (12) zum Abführen des gereinigten Fluids direkt mit dem Reinfluidableitelement (50) verbunden ist.

9. Verwendung nach Anspruch 7 oder 8, **dadurch gekennzeichnet, dass** ein Filterelement verwendet wird, dessen Reinfluidableitelement (50) und/oder Dichtfläche (52) aus mindestens einem mechanisch festen und/oder formstabilen Material gebildet ist, insbesondere ein gussfähiges Material wie z. B. Polyurethan oder Polyamid aufweist, beispielsweise aus Polyamid 66 mit 35 % Glasfaser (PA 66 GF35), gebildet ist.

10. Verwendung nach mindestens einem der Ansprüche 7 bis 9, **dadurch gekennzeichnet, dass** ein Filterelement verwendet wird, dessen Dichtfläche (52), Reinfluidableitelement (50) und Abdeckelement (40) einstückig ausgebildet sind.

11. Verwendung nach einem der vorhergehenden Ansprüche 7 - 10, **dadurch gekennzeichnet dass** ein Filterelement mit als insbesondere mehrlagiger Vlieswickel ausgebildetem Filtermedium (10) verwendet wird.

12. Verwendung nach einem der vorhergehenden Ansprüche 7 - 11, **dadurch gekennzeichnet, dass** ein Filterelement mit umlaufend geschlossen ausgeführtem Abdeckelement (40) und Reinfluidauslass (50) verwendet wird.

13. Verfahren zur Regelung des in einem K[urbel]G[ehäuse]E[ntlüftungs]-System herrschenden Drucks, insbesondere zur Begrenzung des Kurbelgehäuseunterdrucks auf einen bestimmten Wert, wobei zur Regelung des im K[urbel]G[ehäuse]E[ntlüftungs]-System herrschenden Drucks ein in einem Ölabscheider gehäuseseitig angeordneter Ventilschließkörper eines Druckregelventils des K[urbel]G[ehäuse]E[ntlüftungs]-Systems mit einer Dichtfläche des Druckregelventils zusammenwirkt, **dadurch gekennzeichnet, dass** die Dichtfläche (52) an einem in dem Ölabscheider auswechselbar angeordneten Filterelement (100) angeordnet ist und zur Regelung des im K[urbel]G[ehäuse]E[ntlüftungs]-System herrschenden Drucks der Ventilschließkörper (310) relativ zum Filterelement (100), nämlich relativ zur am Filterelement (100) angeordneten Dichtfläche (52), bewegt wird.

**Claims**

1. Oil separator (200) for a P[ositive]C[rank]C[ase]V[entilation] system, featuring at least one filter element (100) designed to separate oil from fluid and at least one pressure regulating valve designed to control the crankcase pressure, in particular to limit the negative pressure applied in the P[ositive]C[rank]C[ase] V[entilation] system, with at least one valve closing body (310) which cooperates with at least one valve seat, the filter element featuring at least one filter medium (10) designed to separate oil from fluid, in particular from aerosol, with a cover surface (30) extending parallel to the flow direction (20) of the fluid flowing through the filter medium (10) and at least one cover element (40) designed to cover the cover surface (30), wherein the cover element (40) features at least one clean fluid discharge element (50) extending away from the filter element (100) and designed to discharge the purified fluid, **characterized in that** the end face of the clean fluid discharge element (50) facing away from the filter element (100) or from the filter medium (10) is designed as a sealing surface (52) for the pressure regulating valve (52, 310, 320, 330) of the P[ositive]C[rank] C[ase]V[entilation] system and forms the valve seat (52) for the valve closing body (310).

2. Oil separator according to claim 1, **characterized in that** the valve closing body (310) features at least one elastically designed sealing element of the valve closing body (320) at least at its area arrangeable in contact with the valve seat (52) of the filter element (100), and is surrounded, in particular at its area arrangeable in contact with the valve seat (52) of the filter element (100), by an elastically designed sealing element of the valve closing body (320).

3. Oil separator according to claim 2, **characterized in that** the sealing element of the valve closing body (320) substantially features at least one elastomer, and is in particular formed from at least one elastomer, for example from ethylene acrylate rubber (AEM) and/or from acrylate rubber (ACM) and/or from in particular hydrogenated nitrile rubber (H)NBR.

4. Oil separator according to one of the preceding claims, **characterized in that** the sealing element of the valve closing body (320) is fixedly or non-detachably connected to the valve closing body (320), and is in particular applied to the valve closing body by means of at least one spray process.

5. Oil separator according to at least one of the preceding claims, **characterized in that** the valve closing body (310) is designed flat or plane at its area facing the valve seat (52), in particular at its area arrangeable in contact with the valve seat (52) of the filter element (100).

6. Oil separator according to at least one of the preceding claims, **characterized by** a first housing part (210) and a further housing part (220), wherein the first housing part (210) features at least one oil separator clean fluid outlet (212) designed to discharge the cleaned fluid and wherein the pressure regulating valve (52, 310, 320 330) is accommodated in the first housing part (210).

7. Use of a filter element (100) with

   - at least one filter medium (10) designed to separate oil from fluid, in particular from aerosol, with a cover surface (30) extending parallel to the flow direction (20) of the fluid flowing through the filter medium (10) and
   - at least one cover element (40) designed to cover the cover surface (30), wherein the cover element (40) features at least one clean fluid discharge element (50) extending away from the filter element (100) and designed to discharge the cleaned fluid,

   in an oil separator of a P[ositive]C[rank]C[ase]V[entilation] system with at least one pressure regulating valve designed to control the crankcase pressure, in particular to limit the negative pressure applied in the P[ositive]C[rank]C[ase] V[entilation] system, with at least one valve closing body (310) **characterized in that** the end face of the clean fluid discharge element (50) facing away from the filter element (100) or from the filter medium (10) is used as sealing surface (52) for the pressure regulating valve (52, 310, 320, 330) of the P[ositive]C[rank]C[ase]V[entilation] system and as valve seat (52) for the valve closing body (310).

8. Use of a filter element according to claim 7, **characterized in that** a filter element (100) is used which is cylindrical, in particular oval cylindrical, and features a hollow space (12) in the interior of the filter medium (10), wherein the fluid to be filtered flows from the circumferential surface (32) of the filter medium (10) to the hollow space (12) and the hollow space (12) is directly connected to the clean fluid discharge element (50) for discharging the cleaned fluid.

9. Use according to claim 7 or 8, **characterized in that** a filter element is used, the clean fluid discharge element (50) and/or sealing surface (52) of which is formed from at least one mechanically strong and/or dimensionally stable material, features in particular a castable material such as polyurethane or polyamide, for example formed from polyamide 66 with 35% glass fiber (PA 66 GF35).

10. Use according to at least one of claims 7 to 9, **characterized in that** a filter element is used, the sealing surface (52), clean fluid discharge element (50) and cover element (40) of which are formed in one piece.

11. Use according to one of the preceding claims 7 to 10, **characterized in that** a filter element with a filter medium (10) designed as a particularly multi-layer nonwoven fabric winding is used.

12. Use according to one of the preceding claims 7 to11, **characterized in that** a filter element with a circumferentially closed cover element (40) and clean fluid outlet (50) is used.

13. Method for controlling the pressure prevailing in a P[ositive]C[rank]C[ase] V[entilation] system, in particular for limiting the crankcase negative pressure to a certain value, wherein a valve closing body of a pressure regulating valve of the P[ositive]C[rank]C[ase]V[entilation] system, arranged in a housing-sided oil separator, cooperates with a sealing surface of the pressure regulating valve to control the pressure prevailing in the P[ositive]C[rank]C[ase]V[entilation] system, **characterized in that** the sealing surface (52) is disposed on a filter element (100) replaceably disposed in the oil separator and, for regulating the pressure prevailing in the P[ositive]C[rank]C[ase]V[entilation] system, the valve closing body (310) is moved relative to the filter element (100), namely relative to the sealing surface (52) disposed on the filter element (100).

**Revendications**

1. Séparateur d'huile (200) pour un système de V[entilation] de C[arter] de V[ilebrequin], présentant au moins un élément filtrant (100) conçu pour séparer de l'huile d'un fluide et au moins une soupape de régulation de pression destinée à réguler la pression du carter de vilebrequin, notamment à limiter la dépression régnant dans le système de V[entilation] de C[arter] de V[ilebrequin], avec au moins un obturateur de soupape (310) qui interagit avec au moins une siège de soupape, l'élément filtrant présentant au moins un milieu filtrant (10) conçu pour séparer de l'huile d'un fluide, notamment d'un aérosol, avec une surface de couverture (30) s'étendant de manière parallèle au sens de flux (20) du fluide parcourant le milieu filtrant (10) et avec au moins un élément de couverture (40) servant à couvrir la surface de couverture (30), l'élément de couverture (40) présentant au moins un élément de dérivation du fluide pur (50) s'étendant dans la direction opposée à l'élément filtrant (100) et destiné à évacuer le fluide purifié,
**caractérisé en ce que**
la surface d'extrémité de l'élément de dérivation du fluide pur (50) orientée à l'opposé de l'élément filtrant (100) ou du milieu filtrant (10) est exécutée en tant que surface d'étanchéité (52) pour la soupape de régulation de pression (52, 310, 320, 330) du système de V[entilation] de C[arter] de V[ilebrequin] et forme le siège de soupape (52) pour l'obturateur de soupape (310).

2. Séparateur d'huile selon la revendication 1, **caractérisé en ce que** l'obturateur de soupape (310) présente, au moins sur sa zone pouvant être mise en contact avec le siège de soupape (52) de l'élément filtrant (100), au moins un élément d'étanchéité d'obturateur de soupape (320) élastique, et est entouré, notamment sur sa zone pouvant être mise en contact avec le siège de soupape (52) de l'élément filtrant (100), d'un élément d'étanchéité d'obturateur de soupape (320) élastique.

3. Séparateur d'huile selon la revendication 2, **caractérisé en ce que** l'élément d'étanchéité d'obturateur de soupape (320) présente essentiellement au moins un élastomère, et est notamment constitué d'au moins un élastomère, par exemple de caoutchouc éthylène acrylique (AEM) et/ou de caoutchouc acrylique (ACM) et/ou de caoutchouc nitrile notamment hydrogéné (H)NBR.

4. Séparateur d'huile selon l'une des revendications précédentes, **caractérisé en ce que** l'élément d'étanchéité d'obturateur de soupape (320) est relié de manière fixe ou inamovible à l'obturateur de soupape (310), et est appliqué sur l'obturateur de soupape notamment selon au moins un procédé de moulage à injection.

5. Séparateur d'huile selon au moins l'une des revendications précédentes, **caractérisé en ce que** l'obturateur de soupape (310) est réalisé de manière plate ou plane sur sa zone dirigée vers le siège de soupape (52), notamment sur sa zone pouvant être mise en contact avec le siège de soupape (52) de l'élément filtrant (100).

6. Séparateur d'huile selon au moins l'une des revendications précédentes, **caractérisé par** une première partie de boîtier (210) et une autre partie de boîtier (220), la première partie de boîtier (210) présentant au moins une sortie de fluide pur de séparateur d'huile (212) destinée à évacuer le fluide purifié et la soupape de régulation de pression (52, 310, 320, 330) étant logée dans la première partie de boîtier (210).

7. Utilisation d'un élément filtrant (100) avec

- au moins un milieu filtrant (10) conçu pour séparer de l'huile d'un fluide, notamment d'un aérosol, avec une surface de couverture (30) s'étendant de manière parallèle au sens de flux (20) du fluide parcourant le milieu filtrant (10) et
- au moins un élément de couverture (40) servant à couvrir la surface de couverture (30), l'élément de couverture (40) présentant au moins un élément de dérivation du fluide pur (50) s'étendant dans la direction opposée à l'élément filtrant (100) et destiné à évacuer le fluide purifié,

dans un séparateur d'huile d'un système de V[entilation] de C[arter] de V[ilebrequin] avec au moins une soupape de régulation de pression destinée à réguler la pression du carter de vilebrequin, notamment à limiter la dépression régnant dans le système de V[entilation] de C[arter] de V[ilebrequin], avec au moins un obturateur de soupape (310), **caractérisée en ce que** la surface d'extrémité de l'élément de dérivation du fluide pur (50) orientée à l'opposé de l'élément filtrant (100) ou du milieu filtrant (10) est utilisée en tant que surface d'étanchéité (52) pour la soupape de régulation de pression (52, 310, 320, 330) du système de V[entilation] de C[arter] de V[ilebrequin] et en tant que siège de soupape (52) pour l'obturateur de soupape (310).

8. Utilisation d'un élément filtrant selon la revendication 7, **caractérisée en ce qu'un** élément filtrant (100) cylindrique, notamment cylindrique ovale présentant un espace creux (12) à l'intérieur du milieu filtrant (10) est utilisé, le fluide à filtrer coulant de la surface d'enveloppe (32) du milieu filtrant (10) vers l'espace creux (12) et l'espace creux (12) étant directement relié à l'élément de dérivation du fluide pur (50) afin d'évacuer le fluide purifié.

9. Utilisation selon la revendication 7 ou 8, **caractérisée en ce qu'un** élément filtrant est utilisé dont l'élément de dérivation du fluide pur (50) et/ou la surface d'étanchéité (52) est constitué(e) d'au moins un matériau à grande résistance mécanique et/ou indéformable, présente notamment un matériau pouvant être moulé, tel que du polyuréthane ou du polyamide, et est constitué par exemple de polyamide 66 composé de 35 % de fibres de verres (PA 66 FV35).

10. Utilisation selon au moins l'une des revendications 7 à 9, **caractérisée en ce qu'un** élément filtrant est utilisé dont la surface d'étanchéité (52), l'élément de dérivation du fluide pur (50) et l'élément de couverture (40) sont réalisés d'une seule pièce.

11. Utilisation selon l'une des revendications 7 à 10 précédentes, **caractérisée en ce qu'un** élément filtrant avec un milieu filtrant (10) composé notamment d'une bobine de non-tissé multicouche est utilisé.

12. Utilisation selon l'une des revendications précédentes 7 à 11, **caractérisée en ce qu'un** élément filtrant avec un élément de couverture (40) à périmètre fermé et une sortie de fluide pur (50) est utilisé.

13. Procédé de régulation de la pression régnant dans un système de V[entilation] de C[arter] de V[ilebrequin], notamment pour limiter la dépression du carter de vilebrequin à une valeur définie, un obturateur de soupape d'une soupape de régulation de pression du système de V[entilation] de C[arter] de V[ilebrequin] disposé du côté du carter dans un séparateur d'huile interagissant avec une surface d'étanchéité de la soupape de régulation de pression afin de réguler la pression régnant dans le système de V[entilation] de C[arter] de V[ilebrequin], **caractérisé en ce que** la surface d'étanchéité (52) est disposée sur un élément filtrant (100) échangeable disposé dans le séparateur d'huile et que, pour la régulation de la pression régnant dans le système de V[entilation] de C[arter] de V[ilebrequin], l'obturateur de soupape (310) bouge par rapport à l'élément filtrant (100), plus précisément par rapport à la surface d'étanchéité (52) située sur l'élément filtrant (100).

**Fig. 1**

**Fig. 2**

**Fig. 3**

**Fig. 4**

320 — 310

**Fig. 5**

311

320

312 — 310

**Fig. 6**

311

350

330

**Fig. 7**

**Fig. 8**

200

214

330

350

311

310

320

212 210

**Fig. 9**

**Fig. 10**

**Fig. 11**

**Fig. 12 Prior Art**

**Fig. 13 Prior Art**

**IN DER BESCHREIBUNG AUFGEFÜHRTE DOKUMENTE**

**In der Beschreibung aufgeführte Patentdokumente**

- DE 102013005624 A1
- WO 2005088417 A1
- US 2011154790 A1
- EP 2272580 A1
- WO 2007135082 A2
- DE 102004022275 A1
- JP 2003336516 A
- WO 2009156303 A1
- EP 1329598 A1
- DE 102011016893 A1